(19) **Europäisches Patentamt**
**European Patent Office**
**Office européen des brevets**

(11) **EP 2 990 435 A1**

(12) **EUROPEAN PATENT APPLICATION**

(43) Date of publication:
**02.03.2016 Bulletin 2016/09**

(51) Int Cl.:
*C08J 9/12* *(2006.01)*    *B29C 44/34* *(2006.01)*
*C08L 27/06* *(2006.01)*    *C08K 5/00* *(2006.01)*
*B29C 47/00* *(2006.01)*    *B29C 47/20* *(2006.01)*

(21) Application number: **15168109.5**

(22) Date of filing: **28.07.2006**

(84) Designated Contracting States:
**AT BE BG CH CY CZ DE DK EE ES FI FR GB GR HU IE IS IT LI LT LU LV MC NL PL PT RO SE SI SK TR**

(30) Priority: **05.08.2005 EP 05076816**

(62) Document number(s) of the earlier application(s) in accordance with Art. 76 EPC:
**06762947.7 / 1 913 063**

(71) Applicant: **Wavin B.V.**
**8011 CW Zwolle (NL)**

(72) Inventors:
• **Overeijnder, Hans**
**7771 EH Hardenberg (NL)**

• **Schuurman, Johan**
**7702 AN Dedemsvaaart (NL)**

(74) Representative: **Hoffmann Eitle**
**Patent- und Rechtsanwälte PartmbB**
**Arabellastraße 30**
**81925 München (DE)**

Remarks:
•This application was filed on 19-05-2015 as a divisional application to the application mentioned under INID code 62.
•Claims filed after the date of filing of the application (Rule 68(4) EPC).

(54) **METHOD OF MAKING AN EXTRUDED MICROCELLULAR POLYMER FOAM PIPE AND DIE**

(57)    Described is a pipe of polymer micro-foam material having an impact strength value measured at 0°C which is higher than 100% and up to 400% of the impact strength as required in the EN-norm of a pipe of the same dimensions and basic material in non-foamed condition. Also are described methods for producing such a pipe. Also a die for an extruder is described having, before the slit thereof, a channel which narrows to the slit with an angle alpha between 10 and 180°, preferably 10 and 90°. Further is described an extruder including a die according to the invention.

Fig. 1

**Description**

The invention firstly relates to a polymer micro-foam pipe of a foamed polymer composition extruded using a foaming agent from a non-foamed polymer composition comprising a thermoplastic polymer material, a filler material and optionally an impact or flow modifier. The pipe as indicated above includes at least a thermoplastic polymer material, a filler material and optionally an impact or flow modifier. Other components however may be present such as pigments or dyes, plasticiser, kicker materials in case a chemical foaming agent is used and other materials, which are conventional in the art.

Extruded polymer micro-foam articles, including pipes, are generally known and are prepared by extruding a polymer composition comprising a thermoplastic polymer material, a filler material and optionally an impact or flow modifier through an extrusion die, wherein a foaming gas is injected in the stream of molten polymer flowing in the extruder in order to give the article, after its exit out of the die of the extruder, a foamed character. The impact strength of such articles as such is relatively low as is illustrated for instance in the book "Thermoplastic Foams" of James L. Throne, Sherwood Technologies Incorporated, 1996, Sherwood Publishers, Hinckley, Ohio, USA. In particular chapter 9, page 466, figure 9.57 shows a graph wherein the reduced density on the horizontal axis is plotted against the reduced impact strength on the vertical axis. Both axes run from lower values up to 1,0, i.e. the maximum value of the reduced density and the reduced impact strength is the non-foamed polymer composition. It appears from that graph that the introduction of gas into the polymer in order to obtain a foamed article results in a marked reduction of the impact strength. For example a reduction of the density to 0,8 (i.e. the density of the foam material is 0,8 times the density of the non-foamed material) results in a reduced impact strength of approximately 0,4. Therefore the impact strength of a foamed article is markedly below the impact strength of the same article, but in non-foamed condition.

In order to prepare foamed pipes having an improved impact strength it has been customary to provide such foamed pipes with integral skins of a non-foamed polymer composition. The combined thickness of such non-foamed skins on the inside and the outside of for example a pipe usually is more than 20% of the total wall thickness of the pipe concerned.

In the research leading to the findings of the present invention, the applicant has surprisingly found that for this drawback of highly reduced impact strength a solution is possible in an extruded polymer micro-foam pipe as claimed in claim 1.

In short, the applicant has been able to prepare an extruded micro-foam article, in particular a pipe, which has an H50 impact strength which is appreciably higher than the impact strength as illustrated in above-mentioned book of James L. Throne. In essence for a foamed polymer composition having less than 80% of the density of the non-foamed polymer composition the H50 impact strength of the micro-foam pipe is higher than 100% and up to 400% of the impact strength as required in the EN-standard of a pipe of the same dimensions made from the same polymer composition in non-foamed condition. The applicable standards define the required H50 value as well as its measurement method. Today (i.e. at the filing date) valid standards are mentioned hereinbelow.

A pipe of a foamed polymer composition according to the invention is compared to a pipe of the non-foamed polymer composition having the same dimensions; both pipes are produced under essentially the same conditions. The same conditions mean here the same temperature of the melt, the same pressure of the melt and the same extrusion speed; the only difference being that for the non-foamed condition the injection of foaming gas (or the generation of foaming gas from a chemical blowing agent) is left out. Small variations in the extrusion conditions are however allowed as long as the composition (except for the foaming agent) and dimensions of the pipes to be compared are kept identical.

In the context of the present specification the expression "non-foamed polymer composition" is used to identify a polymer composition in a non-foamed condition; in other words without a foaming agent. A "foamed polymer composition" means a polymer composition in a foamed condition; in other words a polymer composition also comprising a foaming agent resulting in foam cells. A pipe according to the invention is obtainable by extrusion using 0.01-0.1, preferably 0.01-0.04 weight parts of a foaming agent based on 100 weight parts of the thermoplastic polymer material.

More preferably the H50 impact strength of the extruded polymer micro-foam pipe according to the invention is between 100 and 300% of the impact strength as required in the EN-standard of a pipe of the non-foamed polymer composition having the same dimensions.

In later parts of this description it will be explained which measures are taken to achieve the above-explained result.

The result of a micro-foam pipe having improved impact strength is not specifically achieved by the use of impact or flow modifier in the starting polymer composition. An impact or flow modifier can be present but even if none is used the result of improved impact strength in comparison with the non-foamed pipe is achieved.

In the composition from which the inventive pipe is manufactured an impact or flow modifier can be present. If present the amount is generally 2 weight parts or less, preferably less than 1 weight part but with more preference 0 weight parts of impact or flow modifier are present per 100 weight parts of polymer. Of course higher amounts of impact or flow modifiers may be present in order to assist in improving the impact strength of the pipes further. But one of the advantages of the present invention is the possibility to do without them and therefore reduce the costs of the pipes whilst still obtaining excellent impact properties.

The range of 0-2 weight parts of impact strength or flow modifier is not critical. Amounts higher than 2 weight parts such as 4 or 6 parts can give, within the framework of the invention, pipes falling within the scope of claim 1; the range of 0-2 parts of impact or flow modifier is therefore to be seen as a practical and not a theoretically limiting range.

Impact/flow modifiers, if any, can be selected from polymeric modifiers such as LDPE (low density polyethylene), ABS (acrylonitrile butadiene styrene), MBS (methacrylonitrile butadiene styrene), EVA (ethylene vinyl acetate), chlorinated PE, low crystallinity PP copolymers (EG Adflex ® 100 QF) and the like or mixtures thereof.

A particulate filler material acting as nucleation sites for foaming, is generally used in an amount between 5 and 40 weight parts per 100 parts of polymer, preferably 5 to 20 weight parts and more preferably 15 to 20 weight parts per 100 parts of polymer. Usable filler materials include mica, kaolin, talcum, graphite, aluminium trihydrate, chalk (calcium carbonate) and the like.

In the present invention preferably chalk is used in the amounts indicated above in combination with PVC; talcum is the preferred filler for PP.

Specific examples of filler materials are for example:

Chalk such as Omyalite 50 ®; particle size ca. 3 $\mu$m
Talc such as Luzenac 1445 or 10 MOOS ®; particle size d50 10$\mu$m and 3,7 $\mu$m respectively.
The particle dimensions of the filler materials used are not critical. Optimal particle size of the filler materials is approximately 5 micrometres in view of cell size, cell wall thickness and impact strength. In view thereof platelets of filler material like talcum are less preferred.

The 5 to 40 weight parts of filler material constitute a workable range as found in perfecting the invention. This does not mean that pipes having a different filler content would not show the properties as claimed. The range as indicated is therefore to be considered more a working range than a theoretical range and values outside the range claimed are not to be excluded. Basically filler contents up to 50 or more parts per hundred parts of polymer or less than 5 parts may give the claimed results. The filler content has appeared to be not critical in the context of the invention.

The pipe according to the invention is obtainable by the use of 0,01-0,1, preferably 0,01 to 0,04 weight parts of a gaseous foaming agent. This is quite a low amount of gas and in an earlier application of the applicant it has been found that the amount of gas to be used to obtain a micro-foam should be just sufficient to achieve a structure wherein the gas bubbles are arranged in a close packed structure. For detailed information reference is made to e.g. US2002096797 of the applicant.

The foaming agent can be a physical foaming agent like carbon dioxide, nitrogen, air, oxygen, noble gases, water and isoalkanes such as isopentane, preferably the foaming agent in the present case is nitrogen.

Of course foaming can also be brought about by decomposition of a gas generating chemical agent; an example of such chemical agent is azodicarbonamide, which splits off nitrogen upon heating.

In the present invention, the extruded polymer micro-foam pipe may be produced by using a physical foaming agent such as nitrogen; also a chemical foaming agent like azodicarbonamide may be used; in the latter case the amount of chemical foaming agent should be sufficient to give between 0,01 and 0,04 weight parts of foaming gas based on 100 weight part of the thermoplastic polymer material.

In the extruded polymer micro-foam pipe according to the invention the average foam cell diameter in the foamed polymer composition is less than 50 $\mu$m. This value is of importance as, in accordance with experience, the impact strength of a polymer increases with lowering of the average cell size of the micro-foam. Preferably the average cell size is less than 20$\mu$m, more preferably less than 10$\mu$m.

The polymer to be used for the extruded polymer micro-foam article can be any suitable thermoplastic selected for example from the group of polyethylene, polypropylene, polystyrene, ABS and polyvinylchloride; the preferred polymer is polyvinylchloride.

Such polyvinylchloride can be obtained in various qualities; in the present invention preferably polyvinylchloride having a K-value between 65 and 70 is used, preferably a K-value of 67. The K-value is a usual indication of the average molecular weight of PVC.

The extruded polymer micro-foam pipe preferably has an outside diameter between 32 and 200 mm and a wall thickness between 3 and 6 mm although other diameters and wall thickness values can apply. More preferably the outside diameter is more than 110 mm, most preferably larger than 160 mm.

As indicated before the pipe can, in order to meet certain requirements such as esthetical, include non-foamed inner and outer layers as explained before. The pipe to that end comprises inner and/or outer layers each having a wall-thickness of less than 10% of the total wall thickness of the pipe. Advantageously such a pipe has notably an inner wall with a thickness of less than 5% of the total wall thickness.

The density of the foamed polymer composition can be any value below 80% of the density of the non-foamed polymer composition, preferably the density is about 70% of the density of the non-foamed polymer composition for single layer pipes. For pipes with non-foamed inner and/or outer layers the relative foam density may be lower, such as 60% or even 50%.

The non-foamed polymer composition may also comprise an organic based stabiliser, preferably in an amount of 2.0-4.0, more preferably 2.5-3.5 weight parts per 100 weight parts of thermoplastic polymer material. These stabilisers are in particular useful in preparing large diameter pipes, such as those having a diameter of 110 mm and more.

The non-foamed polymer composition may also contain absorbing agents, which have absorption capacity for the foaming agent used, in particular a gas generating chemical like azodicarbonamide, and attribute in achieving polymeric micro-foam having fine cells. Without wanting to be bound by any theory it is believed that the activity of these absorbing agents relates to the balance between absorption and desorption of the foaming agent. Physical foaming agents like nitrogen and carbon dioxide are seemingly introduced too far downstream in the extruder and therefore the absorption thereof is less than the absorption of chemical foaming agents which are introduced in earlier stages of are already included in the starting polymer composition. The use of these absorbing agents results in a better distribution of the foaming agent in the molten composition in the extruder, a more timely foaming upon reduction of the melt pressure and hence finer cells in the final product. Suitable examples of such absorbing agents comprise zeolites, expanded silicates, diatomaceous earth, perlite and hydrotalcite. Expanded perlite, e.g. Dicalite, having a very open, flaky structure is a preferred example because of its properties including low density. Although not particularly critical the particle size of these absorbing agents is preferably in the order of magnitude of several micrometers e.g. 5 micrometers. This size typically does not exceed the wall thickness between adjacent foam cells, which otherwise would adversely affect the impact strength. According to the invention absorbing agents cannot usually replace all calcium carbonate, in particular not in the production of micro-foam pipe of polyvinylchloride, as in that case there is a risk that the pipe surface becomes overheated and decomposes in the absence of calcium carbonate as a result of the absorbing agent absorbing also the external lubricant such as PE wax, which leads to high friction and consequently burning.

The invention also relates to methods of manufacturing a polymer micro-foam pipe as discussed above by extrusion through a die. In an embodiment as claimed in claim 12 a micro-foam polymer pipe is extruded from a non-foamed polymer composition comprising a thermoplastic polymer material, a filler material and optionally an impact or flow modifier, using a foaming agent through an extrusion die, wherein at the moment the pressure in the die falls below the desorption pressure of the foaming agent, the non-foamed composition is subjected to a shear force such that the density of the foamed polymer composition is less than 80% of the density of the non-foamed polymer composition, the foamed polymer composition has an average foam cell diameter of less than 50 $\mu$m, and the H50 impact strength of the polymer micro-foam pipe measured at 0 °C is higher than 100% and up to 400% of the impact strength as required in the EN-standard of a pipe of the non-foamed polymer composition having the same dimensions. It has been discovered that when the extrusion pressure in the extrusion die drops below the desorption pressure of the foaming gas in the melt, some kind of shear force has to be applied. As a result of which a sufficient number of voids are formed at the particles of the filler material, in its turn resulting in a sufficient amount of bubbles with an appropriate small size. If the pressure is lowered while insufficient shear force is applied, then too large bubbles are created. Thereafter the application of shear force does not allow reducing the size of the bubbles any more. The amount of shear force depends on the type of filler material acting as a nucleating agent for the bubbles to be formed from the foaming gas. The required shear force may be attained by a (high) rate of elongation.

The composition in said methods corresponds to the composition as presented hereinabove for the pipes including the other optional components discussed above.

In another embodiment of the method according to the invention as claimed in claim 13 prior to the exit of the polymer composition through the slit in the extrusion die, said composition is subjected to a relative elongation per unit of time of up to about 220/s, preferably 80-120/s, more preferably about 100/s. Without wanting to be bound by any theory it is assumed that the filler particles present in the channel before the slit in the die are brought into contact with each other just prior to the exit; just after the slit in the die expansion of the polymer composition takes place which allows the contact between the filler particles to be ended. The voids between the filler particles may be filled with gas, upon condition that the pressure in the melt is below the pressure of the dissolved gas. The required rate of elongation depends inter alia on the type of filler and/or absorbing agent acting as a nucleating agent for the bubbles to be formed from the foaming agent and from the viscosity of the melt. For example, Dicalite (an expanded perlite) requires a rate of elongation of 20-40/sec, for use of chalk such asPetrovicy Extra-2 ®, a rate of elongation of less than 100/sec is sufficient, while the rate of elongation for Omyalite 50H ®, should be in the range of 100-200/sec. Talcum requires only 10-20/sec to form the appropriate bubbles, but still the impact strength leaves something to be desired. The higher the viscosity of the melt, the lower the rate of elongation may be.

As a general rule, at the extrusion temperatures used, a content of 1 weight % of nitrogen corresponds to a gas pressure in the melt of 100 bar. When taking a preferred maximum of 0,04 weight % of nitrogen, the maximum gas pressure in the melt, i.e. in the extruder barrel, will be 4 bar. The pressure of the melt in the barrel should, in that case, always be above 4 bar. Downstream of the extrusion die the melt pressure drops below 4 bar leading to the formation of a foam structure.

It has appeared that the aforementioned use of a certain relative elongation per unit of time of up to about 200/s is of high importance for the impact strength characteristics of the final product. The constructional properties of the die which allow for the achievement of values of relative elongation per unit of time up to 200/s will be explained later in connection with a discussion of the construction of the die. The rate of elongation is calculated by the formula:

$$d\varepsilon/dt = V/A^2\, dA/dx,$$

wherein V is volume flow ($m^3$/s),
A is cross-section area of die channel ($m^2$),
x is the position in the longitudinal direction of the die channel.

As said before 0,01 to 0,04 wt.% of nitrogen is preferably used; the nitrogen can of course also be generated by a chemical which releases nitrogen upon heating. The amount of a chemical foaming agent like azodicarbonamide is determined in order to correspond to an amount of nitrogen between 0,01 and 0,04 weight%. Expediently during the extrusion the extruder screw(s) is/are provided with a mixing element on the downstream end, preferably extending over a length of at least four times the inside diameter of the extruder barrel.

In order to achieve the best results, the mass temperature of the foamed polymer after exit from the extrusion die is kept as low as possible, to increase the viscosity of the melt, with the aim of preventing coalescence of the gas bubbles to occur. This will be illustrated later in the discussion of the die according to the invention.

In still another method of manufacturing polymer micro-foam pipes by extrusion according to the invention as claimed in claim 14, in particular from polyvinylchloride, the non-foamed polymer composition is stabilised with organic based stabilisers instead of any of the conventional heavy metal based stabiliser types such a lead-based.

Preferably the stabiliser content is in the range of 2.0 - 4.0, more preferably 2.5 - 3.5 weight parts per 100 weight parts of thermoplastic polymer material.

It has been found that for a PVC-pipe of 110 mm diameter with a total wall thickness of approx. 3,5 mm and having inner and outer non-foamed layers of approx. 0,3 mm thickness, using a formulation with 3.3 parts per hundred organic based stabilizer of the type Naftosave GRX 1630 (supplied by Chemson), 20 parts filler (Omyalite H50) and 0.04 parts nitrogen for the central layer and standard non-foamed lead based formulation for the inner and outer layer, the average foam cell size was 25-50μm, and the H50 impact value was 100Nm, whereas in case of a lead stabilized central layer the average foam cell size was 100-200 μm and the H50 impact value was only 10Nm, everything else being the same in the two pipes. An advantage of this method using organic based stabilisers over the method as described before is that it is easier to make larger pipe sizes above 110 mm, preferably greater than 160 mm, such as above 200 mm in diameter, because it is very difficult to have the required rate of elongation in the die for larger diameter pipes.

The invention also relates to a die for an extruder having a forming slit through which a viscous polymer composition comprising molten thermoplastic polymer material, a filler material, optionally an impact modifier and dissolved foaming gas can be forced in order to obtain, after cooling of the melt, a shaped extruded polymer micro-foam pipe which is characterised by the aspects given in the characterising part of claim 30.

In the foregoing, in the description of the method for forming an extruded polymer micro-foam pipe according to the invention high value was given to subjecting the polymer composition prior to exiting the extrusion die, to a relative elongation per unit of time of up to about 220/s.

In the die according to the invention this can be achieved by having the channel, preceding the slit in the extrusion die through which the polymer composition exits, wider than the slit itself and only narrowing in the direction of the slit according to an angle between 10 and up to 180°, preferably between 10 and 90°. At the same time the length of the slit measured in the direction of the flow of viscous polymer composition which exits the slit upon extrusion is as small as possible, preferably substantially zero, for the extrusion of small diameter pipes.

The applicant has found that, by constructing the die in such a way that the channel leading to the slit is relatively wide whereby a sudden transition between the channel preceding the slit and the slit itself occurs; the gas-bubble size in the melt can be made very uniform and at a low value (i.e. for example less than 50 μm) whereas at the same time the impact strength is higher than 100% and up to 400% of the impact strength as required in the EN-standard of a pipe of the same dimensions and basic material in non-foamed condition.

Basically the narrowing can take place according to any angle between 10 and 180°, preferably between 10 and 90°. By having this narrowing feature in the die a high acceleration of the flow of viscous polymer occurs accompanied by high compression forces lead, upon expansion after the slit in the die, to the formation of a micro-foam having uniform very small gas bubbles and leading to a product having the desirable impact strength properties as explained hereinbefore. The die has as a consequence of this narrowing phenomenon a slit length in the direction of flow of polymer composition which is as small as possible and preferably substantially zero. As will be explained later on basis of the drawing, the length of the slit in the direction of flow is basically a line, i.e. is substantially zero.

In one embodiment the die according to the invention has a slit having a very sharp edge in the form of a line.

In the die according to the invention the width of the slit measured perpendicular to the direction of flow of viscous thermoplastic composition is a factor 1,5 to 3,0 times smaller, preferably about 2 times smaller than the final thickness of the shaped extruded micro-foam pipe.

To illustrate a relation between the die angle and the melt temperature it was shown that when extruding a pipe of 110 mm outside diameter and a wall thickness of 3,0 - 3,5 mm with a melt temperature of 198°C, a die angle of 34° was required for obtaining the foam qualities according to the invention. When lowering the melt temperature to 190° a die angle of 15° was sufficient.

Finally the invention relates to an extruder as given in the preamble of claim 25, which is characterised in that the die used is a die according to the invention as described herein before. In particular in the extruder the die has a circular slit for preparing a pipe.

The invention will now be described with use of a drawing wherein:

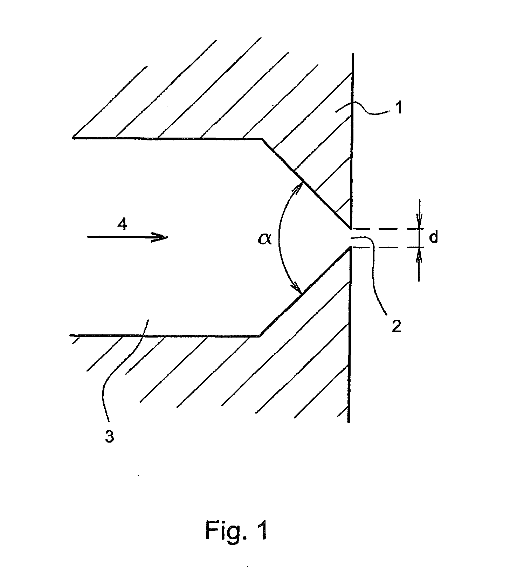

Fig. 1 is a cross section through a part of a die showing a slit in the die preceded by a channel which narrows in the direction of flow of polymer composition.

In fig. 1 the relevant part of a die is shown by the reference numeral 1; there is a slit with reference numeral 2 having a width d.

The channel through which the polymer flows is indicated by 3 and the direction of the flow of polymer is indicated by 4. It is seen that the channel 3 narrows in the direction of the slit 2 with an angle $\alpha$ which basically is between 10 and 180°, preferably between 10 and 90°.

The slit width d is 1,5 to 3,0 times smaller, preferably about two times smaller than the final thickness of the shaped extruded micro-foam pipe.

The transition from the channel 3 to the slit 2 does not necessarily have to be symmetrical as shown in the figure. The angles on either side may deviate from a value of $\alpha/2$.

The invention will now be further explained with some examples, the values of H50 and TIR 10% follow from several standards as indicated hereinafter:

- EN1453-1:2000 relates to structured wall pipes of PVC for indoor application. This standard also covers foam pipes having massive inner and outer layers; in practice the layers each have at least 10% of the total wall thickness in order to have sufficient impact strength.
- pr EN13476-1:2000, as before for outdoor application.
- EN1329-1:1999 for PVC solid wall pipes for indoor application.
- EN1401-1:1998 for PVC solid wall pipes for outdoor application.

The standards described above give values for several types of PVC pipes; in the standard documents there is referred to other documents in which detailed descriptions are given for carrying out the H50 and TIR 10% measurement herein. The method used to measure the impact strength values of foam pipes according to the invention follows the procedure prescribed in above standard publications.

Example 1

Pipes having a diameter of 110 resp. 50 mm were prepared using the following conditions:

PVC : K-value 67

Stabililisation system: Standard lead based for non pressure pipes

Impact modifier : absent

Filler : 18 weight parts per hundred parts PVC of chalk Omyalite 50H ®, average size 3 $\mu$m.

Foaming gas : nitrogen, 0,04 %w/w

Melt temperature : 201° (ø 110mm) resp. 200°C (ø 50mm)

Melt pressure : 158 resp. 90 bar just before the die

Slit width in die : 1.4 resp. 1,05 mm

Angle $\alpha$ in die : 84° resp. 25°.

Wall thickness : 3.0 - 3.5 resp. 3,0 - 3,3 mm

Slit length : substantially zero (is a line).

Average bubble diameter: 30 resp. 44 $\mu$m.

Relative density: 0,7 resp. 0,7

The following values were obtained:

| | Solid wall according to standard | | Foam tube according to the invention | Classical foam tube non-invention |
|---|---|---|---|---|
| Diameter (mm) | TIR 10% (kg.mm) | H50 (kg.m) | H50 (kg.m) | H50 (kg.m) |
| 50 | 0.5 | 2.0 | 6.0 | 0.3 |
| 110 | 1,6 | 4.0 | 11.0 | 1.5 |

From these experiments it appears that a micro-foam pipe according to the invention has an H50 value which is from 2,75 to 3 times higher than the H50 value according to the standard for a solid wall PVC pipe of the same dimensions produced using the same basic material and the same conditions of extrusion.

The micro-foam pipe produced according to the invention has no solid inner and outer wall; the pipe is fully made of micro-foam. If the inner and outer walls would be made out of solid non-foamed material, the H50 value would increase even further.

From this table one can see that foam pipes produced not according to the invention have impact strengths H50 far below the values of the minimum EN Standard for pipes of the same dimensions and the same basic material.

<u>Example 2</u>

A micro-foam PVC (diameter 50 mm; wall thickness 3.0 mm) was made from a composition comprising PVC similar to that of example 1, and 18 wt.% chalk type Omyalite 50H ® using nitrogen gas as foaming agent. The rate of elongation was set at 52/sec. The pipe thus obtained had cells having a diameter of 50-100 micrometers and an impact strength of 8 Nm.

Using the same composition and similar extrusion conditions except a rate of elongation of 216/sec a further micro-foam PVC was manufactured. The cell diameter was 10-30 micrometers and the impact strength was 64 Nm.

From this example it is apparent that the elongation rate has a high impact on cell size and impact strength.

<u>Example 3</u>

A multi-layered micro-foam PVC pipe (diameter 110 mm; wall thickness 3.0 mm) was manufactured using a lead based recipe and a rate of elongation of 0/sec. The pipe had a cell size of 150-300 micrometers. The impact strength was 10 Nm.

Also a multi-layered micro-foam PVC pipe having the same dimensions was manufactured using a PVC recipe, wherein instead of a lead based stabiliser an organic based stabiliser was present (Chemson Naftosave GRX 1630 ®). The rate of elongation was 0/sec. The cell size of the pipe thus obtained was 20-50 micrometers. The impact strength was 96 Nm.

This example shows that a multi-layered micro-foam pipe having sufficient impact strength can be manufactured, wherein the lead based stabiliser is substituted by an organic based stabiliser.

The following numbered items provide further disclosure of the present subject matter.

1. Polymer micro-foam pipe of a foamed polymer composition extruded using a foaming agent from a non-foamed polymer composition comprising a thermoplastic polymer material, a filler material and optionally an impact or flow modifier wherein the density of the foamed polymer composition is less than 80% of the density of the non-foamed polymer composition, the average foam cell diameter in the foamed polymer composition is less than 50 $\mu$m and the H50 impact strength of the polymer micro-foam pipe measured at 0 °C is higher than 100% and up to 400% of the impact strength as required in the EN-standard of a pipe of the non-foamed polymer composition having the same dimensions.

2. Polymer micro-foam pipe according to item 1, wherein said pipe is obtainable by extrusion using 0.01-0.1, preferably 0.01-0.04 weight parts of a foaming agent based on 100 weight parts of polymer.

3. Polymer micro-foam pipe according to item 1 or item 2, wherein the H50 impact strength of said pipe is between 100 and 300% of the impact strength as required in the EN-norm of a pipe of the non-foamed polymer composition having the same dimensions.

4. Polymer micro-foam pipe according to any of the preceding items, wherein the thermoplastic polymer material comprises a polymer selected from the group of polyethylene, polypropylene, polystyrene, ABS and polyvinylchloride, preferably polyvinylchloride.

5. Polymer micro-foam pipe according to any of the preceding items, wherein the pipe has an outside diameter between 32 and 200 mm and a wall thickness between 3 and 6 mm.

6. Polymer micro-foam pipe according to any of the preceding items, wherein the pipe has an outside diameter of more than 110 mm.

7. Polymer micro-foam pipe according to any of the preceding items wherein the pipe has an inner and/or outer non-foamed layer each with a thickness of less than 10% of the total wall thickness of the pipe, preferably an inner non-foamed layer having a wall thickness of less than 5% of the total wall thickness of the pipe.

8. Polymer micro-foam pipe according to any of the preceding items, wherein the amount of filler material is between 5 and 40, preferably between 5 and 20 and more preferably between 15 and 20 weight parts of filler per 100 weight parts of thermoplastic polymer material.

9. Polymer micro-foam pipe according to any of the preceding items, wherein the density of the foamed polymer composition is in the range of about 70% of the density of the non-foamed polymer composition.

10. Polymer micro-foam pipe according to any of the preceding items, wherein the non-foamed polymer composition also comprises an organic based stabiliser, preferably in an amount of 2.0 - 4.0, more preferably of 2.5 - 3.5, weight parts per 100 weight parts of thermoplastic polymer material.

11. Polymer micro-foam pipe according to any of the preceding items, wherein the non-foamed polymer composition also comprises an absorbing agent that is selected from the group of zeolites, expanded silicates, diatomaceous earth, perlite, hydrotalcite.

12. Method of manufacturing a polymer micro-foam pipe of a foamed polymer composition, wherein a non-foamed polymer composition comprising a thermoplastic polymer material, a filler material and optionally an impact or flow modifier is extruded using 0,01-0,1 preferably 0,01- 0,04 weight parts of a foaming gas based on 100 weight parts of the thermoplastic polymer material through an extrusion die, wherein at the moment the pressure in the die falls below the desorption pressure of the foaming agent, the non-foamed composition is subjected to a shear force such that the density of the foamed polymer composition is less than 80% of the density of the non-foamed polymer composition, the foamed polymer composition has an average foam cell diameter of less than 50 $\mu$m, and the H50 impact strength of the polymer micro-foam pipe measured at 0 °C is higher than 100% and up to 400% of the impact strength as required in the EN-standard of a pipe of the non-foamed polymer composition having the same dimensions.

13. Method of manufacturing a polymer micro-foam pipe of a foamed polymer composition, wherein a non-foamed polymer composition comprising a thermoplastic polymer material, a filler material and optionally an impact or flow modifier is extruded through an extrusion die using 0,01-0,1 preferably 0,01- 0,04 weight parts of a foaming gas based on 100 weight parts of the thermoplastic polymer material, wherein the polymer composition prior to its exit through the extrusion die is subjected to a relative elongation per unit of time of up to about 220/s, preferably 80-150/s, more preferably 80-120/s such that the density of the foamed polymer composition is less than 80% of the density of the non-foamed polymer composition, the foamed polymer composition has an average foam cell diameter of less than 50 $\mu$m, and the H50 impact strength of the polymer micro-foam pipe measured at 0 °C is higher than 100% and up to 400% of the impact strength as required in the EN-standard of a pipe of the non-foamed polymer composition having the same dimensions.

14. Method of manufacturing a polymer micro-foam pipe of a foamed polymer composition, wherein a non-foamed polymer composition comprising a thermoplastic polymer material, a filler material and optionally an impact or flow modifier is extruded using 0,01-0,1 preferably 0,01- 0,04 weight parts of a foaming gas based on 100 weight parts of the thermoplastic polymer material, such that the density of the foamed polymer composition is less than 80% of the density of the non-foamed polymer composition, the foamed polymer composition has an average foam cell diameter of less than 50 $\mu$m, and the H50 impact strength of the polymer micro-foam pipe measured at 0 °C is higher than 100% and up to 400% of the impact strength as required in the EN-standard of a pipe of the non-foamed polymer composition having the same dimensions, wherein the non-foamed polymer composition is stabilised with organic based stabilisers.

15. Method according to one of the items 12-14, wherein the foaming gas comprises nitrogen or a chemical which generates nitrogen upon heating.

16. Method according to any of the items 12-15, wherein the extrusion is performed using on the downstream end of the screws one or more mixing elements.

17. Method according to item 16, wherein the mixing element(s) extend(s) over a length of at least 4 times the inside diameter of the extruder barrel.

18. Method according to any of the items 12-17, wherein the thermoplastic polymer material comprises a polymer selected from the group of polyethylene, polypropylene, polystyrene, ABS and polyvinylchloride, preferably polyvinylchloride .

19. Method according to any of the items 12-18, wherein the amount of filler material is between 5 and 40, preferably between 5 and 20 and more preferably between 15 and 20 weight parts of filler per 100 weight parts of thermoplastic polymer material.

20. Method according to any of the preceding items 14-19, wherein the amount of the organic based stabiliser is in the range of 2.0 - 4.0, preferably of 2.5 - 3.5, weight parts per 100 weight parts of thermoplastic polymer material.

21. Method according to any of the preceding items 12-20, wherein the non-foamed composition also comprises an absorbing agent, preferably selected from the group of zeolites, expanded silicates, diatomaceous earth, perlite, hydrotalcite.

22. Method according to any of the preceding items 12-21, wherein the method is carried out as a co-extrusion method in which a stream of foamable polymer composition and one or more streams of non-foamable polymer composition are fed to a die for forming a pipe having an inner and/or outer non-foamed layer, preferably the thickness of the inner and/or outer non-foamed layer being less than 10% of the total wall thickness of the pipe, more preferably the non- foamed inner layer having a thickness less than 5% of the total wall thickness of the pipe.

23. Die (1) for an extruder having a circular forming slit (2) through which a viscous polymer composition comprising molten thermoplastic polymer material, a filler material, optionally an impact modifier and dissolved foaming gas can be forced in order to obtain, after cooling of the melt, a shaped extruded polymer micro- foam pipe, the channel (3) in the die (2) leading to the forming slit (2) out of which the viscous polymer composition is forced during extrusion is wider than the slit (2) and narrows in the direction of the slit (2) according to an angle $\alpha$ between 10 and up to 180°, preferably between 10 and 90°, whereby the length of the slit (2) measured in the direction of the flow (4) of viscous polymer composition which exits the slit (2) upon extrusion is as small as possible, preferably substantially zero.

24. Die (1) according to item 23, wherein the width (d) of the slit (2) measured perpendicular to the direction of flow (4) of viscous thermoplastic composition which exits the slit (2) upon extrusion is a factor 1,5-3,0 times smaller, preferably about 2 times smaller, than the final thickness of the shaped extruded micro-foam article.

25. Extruder comprising a tubular barrel, heating means, one or more screws, a hopper for feeding a polymer composition to be extruded to the screws, one or more gas injection ports and a die (1), the die (1) being a die (1) according to one or more of the items 23-24.

## Claims

1. Method of manufacturing a polymer micro-foam pipe of a foamed polymer composition, wherein a non-foamed polymer composition comprising a thermoplastic polymer material and filler material is extruded through an extrusion die using 0,01-0,1 weight parts of a foaming gas based on 100 weight parts of the thermoplastic polymer material, **characterized in that** the polymer composition prior to its exit through the extrusion die is subjected to a relative elongation per unit of time of 80-220/s, such that the density of the foamed polymer composition is less than 80% of the density of the non-foamed polymer composition, the foamed polymer composition has an average foam cell diameter of less than 50 $\mu$m, and the H50 impact strength of the polymer micro-foam pipe measured at 0 °C is higher than 100% and up to 400% of the impact strength as required in the EN-standard of a pipe of the non-foamed polymer composition having the same dimensions, the H50 impact strength values following from any of EN1453-1:2000 and EN1401-1:1998, EN13476-1:2000, EN1329-1:1999.

2.  Method according to claim 1, wherein the thermoplastic material and the filler material is extruded through the extraction die using 0.01-0.4 weight parts of a foaming gas based on 100 weight parts of the thermoplastic material.

3.  Method according to claim 1 or 2, wherein the relative elongation per unit of time is 80-150/s, preferably 80-120/s.

4.  Method according to one of the claims 1-3, wherein the foaming gas comprises nitrogen or a chemical which generates nitrogen upon heating.

5.  Method according to any of the claims 1-4, wherein the extrusion is performed using on the downstream end of the screws one or more mixing elements.

6.  Method according to claim 5, wherein the mixing element(s) extend(s) over a length of at least 4 times the inside diameter of the extruder barrel.

7.  Method according to any of the claims 1-6, wherein the thermoplastic polymer material comprises a polymer selected from the group of polyethylene, polypropylene, polystyrene, ABS and polyvinylchloride, preferably polyvinylchloride .

8.  Method according to any of the claims 1-7, wherein the amount of filler material is between 5 and 40, preferably between 5 and 20 and more preferably between 15 and 20 weight parts of filler per 100 weight parts of thermoplastic polymer material.

9.  Method according to any of the preceding claims 1-8, wherein the non-foamed composition also comprises an absorbing agent, preferably selected from the group of zeolites, expanded silicates, diatomaceous earth, perlite, hydrotalcite.

10. Method according to any of the preceding claims 1-9, wherein the method is carried out as a co-extrusion method in which a stream of foamable polymer composition and one or more streams of non- foamable polymer composition are fed to a die for forming a pipe having an inner and/or outer non-foamed layer, preferably the thickness of the inner and/or outer non-foamed layer being less than 10% of the total wall thickness of the pipe, more preferably the non- foamed inner layer having a thickness less than 5% of the total wall thickness of the pipe.

11. A method according to any one of claims 1-10, wherein the non-foamed polymer composition further comprises an impact or flow modifier.

12. Die (1) for an extruder for subjecting a polymer composition prior to exiting the extrusion die, to a relative elongation per unit of time of up to about 220/s, the die having a circular forming slit (2) through which a viscous polymer composition comprising molten thermoplastic polymer material, a filler material, optionally an impact modifier and dissolved foaming gas can be forced in order to obtain, after cooling of the melt, a shaped extruded polymer micro-foam pipe, a channel (3) in the die (2) leading to the forming slit (2) out of which the viscous polymer composition is forced during extrusion is wider than the slit (2) and narrows in the direction of the slit (2) according to an angle $\alpha$ between 10° and up to 180°, **characterized in that** the slit has an edge in the form of a circular line, whereby the length of the slit (2) measured in the direction of the flow (4) of viscous polymer composition which exits the slit (2) upon extrusion is determined by said edge, wherein the slit has a slit width (d) between an element within the circle of the circular slit and the edge, wherein the transition from the channel (3) between the channel wall and the element to the slit (2) is symmetrical such that the angle on either side corresponds to a value $\alpha/2$, or wherein the transition from the channel to the slit is non-symmetrical and the angle on either side deviate from a value of $\alpha/2$.

13. Die (1) according to claim 12, combined with an extruder comprising a tubular barrel, heating means, one or more screws, a hopper for feeding a polymer composition to be extruded to the screws, and one or more gas injection ports.

14. Die (1) according to any of the preceding claims, wherein the channel (3) narrows in the direction of the slit (2) according to the angle $\alpha$ between 10° and 90°.

15. Use of a die according to any one of the previous claims 12-14 to obtain a pipe of a polymer micro-foam material.

16. Use according to claim 15, wherein the width (d) of the slit (2) measured perpendicular to the direction of flow (4) of viscous thermoplastic composition which exits the slit (2) upon extrusion is a factor 1,5-3,0 times smaller, preferably about 2 times smaller, than the final thickness of the shaped extruded micro-foam pipe.

Fig. 1

Europäisches
Patentamt
European
Patent Office
Office européen
des brevets

# EUROPEAN SEARCH REPORT

Application Number

EP 15 16 8109

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 00/31170 A (TREXEL, INC; CHEN, LIQIN) 2 June 2000 (2000-06-02) | 1-9,11 | INV. C08J9/12 |
| Y | * page 11, lines 27-30; claims 1,12,14,21,27,31,37; example 1 * * page 6, line 31 - page 7, line 3 * | 10,15,16 | B29C44/34 C08L27/06 C08K5/00 B29C47/00 |
| X | JP 2002 089755 A (MITSUBISHI PLASTICS IND) 27 March 2002 (2002-03-27) | 12-14 | B29C47/20 |
| Y | * abstract; figure 5 * | 10,15,16 | |
| X | JP 2002 331566 A (SEKISUI CHEMICAL CO LTD) 19 November 2002 (2002-11-19) * abstract; figure * | 12-14 | |
| X | JP 2002 326271 A (DAICEL NOVAFOAM LTD) 12 November 2002 (2002-11-12) * abstract; figures * | 12-14 | |
| A | WO 98/08667 A (TREXEL, INC; BURNHAM, THEODORE, A; CHA, SUNG, W; WALAT, ROBERT, H; KIM) 5 March 1998 (1998-03-05) * page 24, paragraph 3; figure 1 * * page 38, line 14 - line 19 * | 12 | |

TECHNICAL FIELDS
SEARCHED      (IPC)

C08J
B29C
C08L
C08K

The present search report has been drawn up for all claims

| Place of search | Date of completion of the search | Examiner |
|---|---|---|
| The Hague | 6 January 2016 | Pipping, Lars |

EPO FORM 1503 03.82 (P04C01)

## ANNEX TO THE EUROPEAN SEARCH REPORT
## ON EUROPEAN PATENT APPLICATION NO.

EP 15 16 8109

This annex lists the patent family members relating to the patent documents cited in the above-mentioned European search report.
The members are as contained in the European Patent Office EDP file on
The European Patent Office is in no way liable for these particulars which are merely given for the purpose of information.

06-01-2016

| Patent document cited in search report | | Publication date | Patent family member(s) | | Publication date |
|---|---|---|---|---|---|
| WO 0031170 | A | 02-06-2000 | AT | 239050 T | 15-05-2003 |
| | | | CA | 2352586 A1 | 02-06-2000 |
| | | | DE | 69907517 D1 | 05-06-2003 |
| | | | EP | 1144490 A1 | 17-10-2001 |
| | | | JP | 2002530497 A | 17-09-2002 |
| | | | WO | 0031170 A1 | 02-06-2000 |
| JP 2002089755 | A | 27-03-2002 | NONE | | |
| JP 2002331566 | A | 19-11-2002 | NONE | | |
| JP 2002326271 | A | 12-11-2002 | NONE | | |
| WO 9808667 | A | 05-03-1998 | AT | 228421 T | 15-12-2002 |
| | | | AT | 295254 T | 15-05-2005 |
| | | | AU | 755441 B2 | 12-12-2002 |
| | | | AU | 4164897 A | 19-03-1998 |
| | | | CA | 2264159 A1 | 05-03-1998 |
| | | | DE | 69717465 D1 | 09-01-2003 |
| | | | DE | 69717465 T2 | 10-07-2003 |
| | | | DE | 69733286 D1 | 16-06-2005 |
| | | | DE | 69733286 T2 | 19-01-2006 |
| | | | EP | 0923443 A2 | 23-06-1999 |
| | | | EP | 1275485 A2 | 15-01-2003 |
| | | | JP | 4240540 B2 | 18-03-2009 |
| | | | JP | 4563146 B2 | 13-10-2010 |
| | | | JP | 2002501443 A | 15-01-2002 |
| | | | JP | 2005178366 A | 07-07-2005 |
| | | | US | 6284810 B1 | 04-09-2001 |
| | | | US | 2005256215 A1 | 17-11-2005 |
| | | | WO | 9808667 A2 | 05-03-1998 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002096797 A